# EUROPEAN PATENT APPLICATION

(11) **EP 1 353 332 A1**
(43) Date of publication of application: **15.10.2003**
(21) Application number: 03290913.7
(22) Date of filing: 11.04.2003
(51) Int. Cl.: G11B 20/00

(54) **Apparatus and method for preparing modified data to prevent unauthorized reading/execution of original data**

(30) Priority: 12.04.2002 JP 2002110109
(71) Applicant: Hudson Soft Co., Ltd., Sapporo-shi, Hokkaido (JP); VICTOR COMPANY OF JAPAN, LIMITED, Yokohama-shi, Kanagawa 221-0022 (JP)
(72) Inventor: Yonekawa, Masaki, Sapporo-shi, Hokkaido (JP); Hirayoshi, Takuma 302 Riessent Satozuka, Sapporo-shi, Hokkaido (JP)
(74) Representative: Joly, Jean-Jacques

(57) **Abstract**

An apparatus for preventing unauthorized reading/execution which does not necessarily require an extra storage region, but controls adverse effects to operating environment such as OS or the like, and contributes to restricting diffusion or distribution of unauthorized copies. An original CD-ROM readable by a driver stores original data, which in part contains modified data of a different value from a predetermined value to be generated by the driver. A copied CD-ROM stores copied data of the original data, and data of such predetermined value as generated by the driver at a time of making the copy. To prevent execution of data that is to be read by the driver, an apparatus for preventing unauthorized reading/execution (181) is provided with a modified data detecting unit (182) capable of detecting modified data from the data stored in the original CD-ROM or the copied CD-ROM, and a copied CD-ROM performing unit (195) for preventing execution of data by read-out of the driver, in response to failure of detecting the modified data by the modified data detecting unit (182).

## Description

### Background of the Invention

### Field of the Invention

This invention relates to a data modifying apparatus, a modified data preparing method, an original data recording method, a recording medium therefor, an apparatus for preventing unauthorized reading/execution, and, an method for preventing unauthorized reading/execution for preventing execution of data which is read out by reading means from a copied recording medium, in which copied data of the original data, and data of a predetermined value to be generated at a time of making the copy by the reading means, are stored.

### Description of the Prior Art

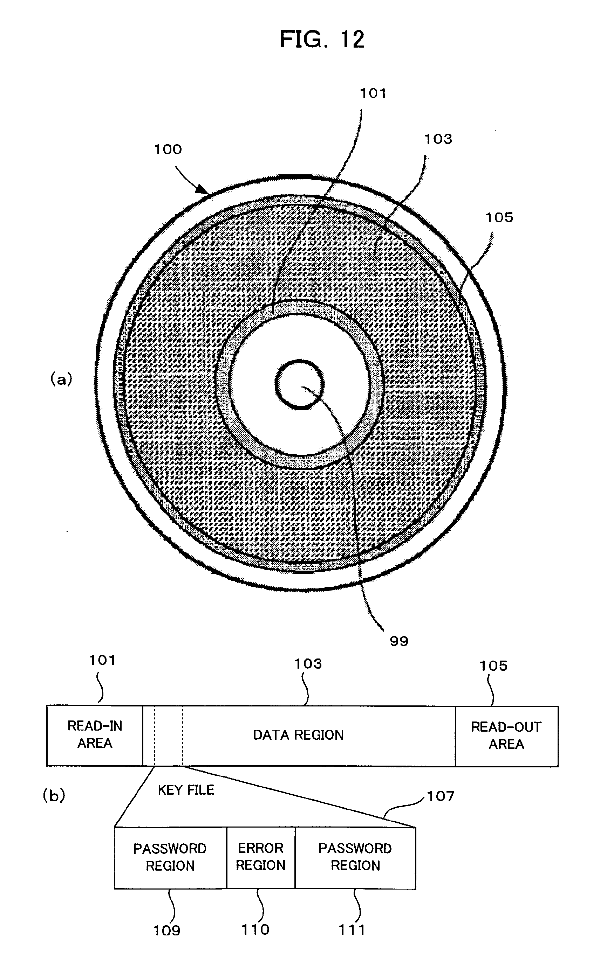

A conventional optical disk recording medium, which is difficult to be replicated, is shown in Fig. 12, an explanatory view showing how a recording region in the recording medium is constructed. In particular, Fig.12(a) is a plan view of the optical disk recording medium, and Fig.12(b) is an explanatory view showing the recording region.

CD (compact disc) -ROM 100 as the optical disk recording medium has a center hole 99, and a consecutive spiral track path that starts from an inner side toward an outer side of the disc.

The recording region is divided into three sections, i.e., a read-in area 101, a data region 103 and a read-out area 105. In the data region 103, data files of various kinds are recorded. One of the data files recorded in the data region 103 is a key file 107.

The key file 107 comprises password regions 109 and 111, which include a character string, i.e., a key to be used as a password, and an error region 110 in which recorded is error data for generating an error at a time of read-out.

When such CD-ROM 100 is read out for copying by a CD-ROM drive, such copying is not carried out due to the error data recorded in the error region 110.

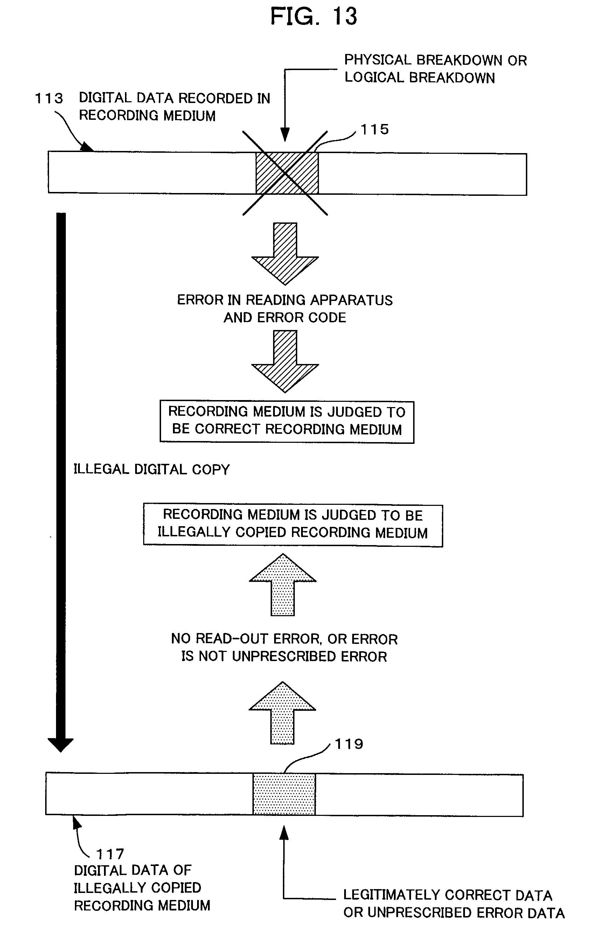

Fig.13 is a conceptual view illustrating another conventional technique for preventing an illegal or unauthorized (hereinafter collectively referred to as "unauthorized") copy of digital data which is recorded in a recording medium.

Digital data 113 recorded in the recording medium contains a region 115, i.e., an error region holding digitally broken data. When read-out of such digital data 113 is attempted, an error occurs in data read-out. Such occurrence in reading the recording medium is judged to be a reading from an original and authorized recording medium, and the error occurrence is treated as significant data, thereby subsequent data being read out.

When the digital data 113 recorded in the recording medium is copied by readout equipment, error data must be obtained, at the time of reading out the data from the region 115, by correcting the data to such a situation that it is read out as an error data by means of a sophisticated error correction method, or by a read-out error function corresponding to the predetermined error. Thus, the error data so read out is copied as unbroken, digitally meaningful data, or even the error data is skipped, then an original data form of the recording medium is not copied as it is.

In short, a region 119 of digital data 117 in an unauthorized copy of the recording medium contains no erroneous data or contains unprescribed error data. When the digital data 117 containing such erroneous data or unprescribed error data is read out, no read-out error occurs or an error is not the unprescribed error, thus it becomes possible to judge that the recording medium is an unauthorized copy.

However, in the technique for preventing a replication in such a manner that a disenabling sector which generates an error as mentioned above is prepared in the recording medium, and an error occurs at a time of read-out by a replication software, it is easy to identify the cause of such an error because such an error occurs at the time of read-out. Therefore, by developing a certain duplicating software capable of dealing with the error, more specifically, by using a duplicating software capable of copying the disenabling sector in such a situation that read-out from the disenabling sector is not possible, unauthorized copying may continue.

In addition, since the disenabling sector for generating the error as mentioned above must be set at a location where such section is positioned as a dummy file, an extra region is necessary.

Further, depending upon an OS (Operating System) and a drive to be used, malfunctions may happen in the OS.

### Summary of the Invention

Accordingly, it is an object of the invention to provide a data modifying apparatus which does not necessarily requires such an extra recording region, but controls adverse effects to operating environment such as OS or the like, and contribute to restricting diffusion or distribution of unauthorized copies of an original recording medium.

It is another object of the invention to provide a method for preparing modified data, which is directed to the above purposes.

It is a further object of the invention to provide an apparatus for recording original data, which is directed to the above purposes.

It is still an object of the invention to provide a method for recording original data, which is directed to the above purposes.

It is still an object of the invention to provide an apparatus for preventing unauthorized reading/execution of data to be read out from a copied recording medium, which is directed to the above purposes.

It is still an object of the invention to provide a method for preventing unauthorized reading/execution of data to be read out from a copied recording medium, which is directed to the above purposes.

It is still an object of the invention to provide a computer program, executed by a computer, for preparing modified data, which is directed to the above purposes.

It is still an object of the invention to provide a computer program, executed by a computer, for recording original data, which is directed to the above purposes.

It is still an object of the invention to provide a computer program, executed by a computer, for preventing unauthorized reading/execution of data to be read out from a copied recording medium, which is directed to the above purposes.

According to one aspect of the invention, a data modifying apparatus for modifying original data to be recorded in an original recording medium, so as to prevent execution of data that is read out by a reading means from a copied recording medium, in which copied data, and data of a predetermined value to be generated at a time of making the copy by the reading means, are recorded, the data modifying apparatus comprises: modified data preparing means for preparing modified data as a part of the original data, the modified data being of a different value from such predetermined value as generated by the reading means.

By preparing the modified data as a part of the original data, it becomes possible to record in the original recording medium, the original data that is used for preventing reading/execution from the copied recording medium by the reading means.

According to the invention, preferably, the original recording medium is an optical disc; and the modified data is a constituent data of a sub-channel Q of a sub-code.

By preparing the modified data which is contained in the sub-channel Q of the sub-code, which is not freely dealt with by a user, as a part of the original data, it becomes possible to record the original data in an original optical disc for preventing reading/execution from a copied recording medium by the reading means.

According to the invention, preferably, the constituent data of sub-channel Q of the sub-code includes a cyclic redundancy check value; and the modified data preparing means comprises means for preparing a modified cyclic redundancy check value of a different value from such predetermined value as generated by the reading means.

The reading means generates the cyclic redundancy check value by calculating through the use of values of control, address and data Q; the control, address and data Q constitute the sub-channel Q of the sub-code. Such cyclic redundancy check value is prepared as the modified data.

According to the invention, preferably, the constituent data of the sub-channel Q of the sub-code includes configuration data in data Q.

The configuration data in the data Q is prepared as the modified data other than the cyclic redundancy check value.

According to the invention, preferably, the configuration data in the data Q includes time information relative to a track or time information from a beginning of the optical disc; and the modified data preparing means comprises a means for preparing modified time information relative to the track or modified time information from the beginning of the optical disc, the modified time information being of a different value from such predetermined value as generated by the reading means.

The time information relative to the track or the time information from the beginning of the optical disc, which the reading means generates sequentially, is prepared as the modified data.

According to another aspect of the invention, in a method for preparing modified data, modifying original data to be recorded in an original recording medium so as to prevent execution of data that is read out by a reading means from a copied recording medium, in which copied data, and data of a predetermined value to be generated at a time of making the copy by the reading means, are recorded; a modified data is prepared as a part of the original data by a modified data preparing means, the modified data being of a different value from such predetermined value as generated by the reading means.

According to a further aspect of the invention, in a method for recording original data in an original recording medium, so as to prevent execution of data that is read out by a reading means from a copied recording medium, in which copied data, and data of a predetermined value to be generated at a time of making the copy of the original recording medium by the reading means, are recorded, the method comprises the steps of: preparing a modified data as a part of an original data by a modified data preparing means, the modified data being of different value from such predetermined value as generated by the reading means; and recording, in an original recording medium, the original data that includes the modified data prepared by the preparation step.

According still an aspect of the invention, in an original recording medium so as to prevent execution of data that is read out by a reading means from a copied recording medium, in which copied data, and data of a predetermined value to be generated at a time of making the copy of the recording medium by the reading means, are recorded, the original recording medium holds recorded original data, and the recorded original data includes modified data that is of a different value from such predetermined value as generated by the reading means.

The data recorded in the copied recording medium, which was copied from the original recording medium that contains original data, are the data of such predetermined value as generated at the time of copying by the reading means, instead of the modified data.

According to the invention, preferably, the original recording medium is an optical disc.

According to the invention, preferably, the original recording medium is a compact disc.

According to the invention, preferably, the modified data includes a modified cyclic redundancy check value in a sub-channel Q of a sub-code.

According to the invention, preferably, the modified data includes modified time information relative to a track or modified time information from a beginning of the optical disc in data Q, which is a constituent part of the sub-channel Q of the sub-code.

According to the invention, preferably, the modified data is data which is modified over a plurality of sectors.

By modifying data over a plurality of sectors as such, it becomes easy to carry out a detecting process of the modified data, which is used for a judgment for whether the recording medium is the original or a copy.

According to the invention, preferably, the modified data is data of an audio track structure.

In this manner, by making the data of the audio track structure into the modified data, such modified data is detected frequently as compared to a case that data of a data track structure is made into the modified data, whereby it becomes easy to carry out a detecting process of the modified data which is used for a judgment for whether the recording medium is the original or a copy.

According to the invention, preferably, the modified data is the data of the audio track structure located outside of a data track structure which is located inside toward a center of a disc.

In this manner, in case that the data read out from the original recording medium is executed, the data of the audio track structure, which are outwardly arranged and read out through a last half of an entire read-out, is used to incorporate the modified data, while read-out itself of the data track structure, which are inwardly arranged at the central side and read out through a first half of the entire read-out, is carried out smoothly.

According to still an aspect of the invention, in an apparatus for preventing unauthorized reading/execution, so as to prevent execution of data read out by reading means from a copied recording medium, in which copied data, and data of a predetermined value to be generated at a time of making the copy by the reading means, are recorded, wherein an original recording medium to be read out by the reading means holds recorded original data which in part contains modified data of a different value from such predetermined value as generated by the reading means, the apparatus comprises: a modified data detecting means capable of detecting, from the recorded data in the original recording medium or the copied recording medium, modified data which is recorded and is of a different value from such predetermined value as generated by the reading means; and a reading/execution blocking means, in response to failure of detecting the modified data by the modified data detecting means, for blocking execution of data by read-out of the reading means.

In this manner, by blocking execution of data by read-out of the reading means in response to whether the modified data could be detected or not, it is possible to prevent reading/execution of data recorded in the copied recording medium.

According to the invention, preferably, the apparatus for preventing unauthorized reading/execution of data further comprises a reading/execution continuing means, in response to a success of detection of the modified data by the modified data detecting means, for continuing execution of data by read-out of the reading means.

By continuing execution of data by read-out of the reading means in response to whether the detection of the modified data could be done or not, it is possible to continue the reading/execution of data recorded in the original recording medium.

According to the invention of the apparatus for preventing unauthorized reading/execution of data, preferably, the original recording medium is an optical disc; and the modified data is a constituent part of a sub-channel Q of a sub-code; and the modified data detecting means comprises: sub-channel Q reading means for reading the sub-channel Q of the sub-code, after seeking a read-out address; sub-channel Q buffering means for buffering the sub-channel Q of the sub-code which is read out by the sub-channel Q reading means; sub-channel Q statistic processing means for performing statistic processing for a plurality of the sub-channels Q of the sub-codes which are acquired by a plurality of operations of the sub-channel Q reading means and the sub-channel Q buffering means; and modified data judging means for judging, from the result processed by the sub-channel Q statistic processing means, whether or not constituent data of the sub-channel Q of the sub-code, which is presumed to correspond to the read-out address, is the modified data.

By processing like this, highly versatile detecting of the modified data, which is less dependent on the variety of the reading means, is possible.

According to the invention, preferably, the modified data includes a modified cyclic redundancy check value which is a constituent part of the sub-channel Q of the sub-code.

According to the invention, the modified data includes modified configuration data in data Q which is a constituent part of the sub-channel Q of the sub-code.

According to the invention, the modified configuration data in the data Q includes modified time information relative to a track or modified time information from a beginning of the optical disc.

According to still an aspect of the invention, in an method for preventing unauthorized reading/execution of data so as to prevent reading/execution of data which is read out by a reading means from a copied recording medium, in which copied data, and data of a predetermined value to be generated at a time of making the copy by the reading means, are recorded, wherein an original recording medium, which is capable of being read out by the reading means, records original data which in part contains modified data of a different value from such predetermined value as generated by the reading means, the method comprises the steps of; detecting, from data recorded in the original recording medium or the copy of recording medium by a modified data detecting means, a modified data which is recorded and is of a different value from such predetermined value as generated by the reading means; and blocking, in response to failure of detecting the modified data by the detecting means, reading/execution of data by read-out of the reading means.

According to the invention, preferably, the method for preventing unauthorized reading/execution of data further comprises the step of continuing, in response to a successful detection of the modified data by the modified data detecting means, execution of data by read-out of the reading means.

According to the invention of the method for preventing unauthorized reading/execution of data, preferably, the original recording medium is an optical disc; the modified data is a constituent part of a sub-channel Q of a sub-code, and the detecting step comprises the steps of: reading a sub-channel Q of a sub-code by a sub-channel Q reading means, after seeking a read-out address; buffering, by a sub-channel Q buffering means, read-out data of the sub-channel Q of the sub-code; performing, by a sub-channel Q statistic processing means, statistic processing for a plurality of the sub-channels Q of the sub-codes which are acquired by a plurality of operations of the sub-channel Q reading steps and the sub-channel Q buffering step; and judging, from the result processed by the sub-channel Q statistic processing step, by a modified data judging means, whether or not the data of the sub-channel Q of the sub-code, which is presumed to correspond to the read-out address, is the modified data.

According to still an aspect of the invention, in a computer program, executed by a computer, for preparing a modified data, the modified data being a part of an original data to be recorded in an original recording medium, so as to prevent execution of data that is read out by a reading means from a copied recording medium, the program comprises the steps of: providing original data to be recorded in an original recording medium; and preparing a modified data, which is of a different value from such predetermined value as generated by a reading means at a time of making the copy.

According to still an aspect of the invention, in a computer program, executed by a computer, for recording original data in an original recording medium, so as to prevent execution of data that is read out by a reading means from a copied recording medium, in which copied data, and data of a predetermined value to be generated at a time of making the copy of the original recording medium by the reading means, are recorded, the program comprises the steps of: preparing a modified data as a part of an original data by a modified data preparing means, the modified data being of a different value from such predetermined value as generated by the reading means; and recording, in an original recording medium, the original data that includes the modified data prepared by the preparation step.

According to still an aspect of the invention, in a computer program, executed by a computer, for preventing unauthorized reading/execution of data that is read out by a reading means from a copied recording medium, in which copied data, and data of a predetermined value to be generated at a time of making the copy by the reading means, are recorded, wherein an original recording medium, which is capable of being read out by the reading means, records original data which in part contains modified data of a different value form a predetermined value to be generated by the reading means, the program comprises the steps of; detecting, from data recorded in the original recording medium or the copied recording medium by a modified data detecting means, a modified data which is recorded and is of a different value from such predetermined value as generated by the reading means; andblocking, in response to failure of detecting the modified data by the detecting means, a reading/execution of data by read-out of the reading means.

According to still an aspect of the invention, in a computer program, stored in an original recording medium or a copied recording medium, executed by a computer, for preventing unauthorized reading/execution of data that is read out by a reading means from the copied recording medium, in which copied data, and data of a predetermined value to be generated at a time of making the copy by the reading means, are recorded, wherein the original recording medium, which is capable of being read out by the reading means, records original data which in part contains modified data of a different value from such predetermined value as generated by the reading means, the program comprises the steps of; detecting, from data recorded in the original recording medium or the copy of recording medium by a modified data detecting means, a modified data which is recorded and is of a different value from such predetermined value as generated by the reading means; and blocking, in response to failure of detecting the modified data by the detecting means, a reading/execution of data by read-out of the reading means.

The computer programs according to the invention may be incorporated in either the original recording medium or the copied recording medium.

### Brief Description of the Drawings

The invention will be explained in more detail in conjunction with appended drawings, wherein:
Fig. 1 is a view showing a sub-code structure of a normal CD-ROM.
Fig. 2 is a view showing a structure of a sub-channel Q of Fig.1.
Fig. 3 is a view showing a structure of the sub-channel Q with respect to each sector of a sector (X) through a sector (X+n) in an entire CD-ROM.
Fig. 4 is a block diagram showing a data modifying apparatus in accordance with a preferred embodiment of the invention.
Fig. 5 is a flow chart illustrating an operation of the data modifying apparatus of Fig.4.
Fig. 6 is a view which corresponds to Fig.2 and shows a structure of the sub-channel Q in which modified portions are specified.
Fig. 7 is a view which corresponds to Fig.3 and shows a structure of the sub-channel Q with respect to each sector in the entire CD-ROM in which the modified portions are specified.
Fig. 8 is a block diagram showing an apparatus for preventing unauthorized reading/execution of data in accordance with another embodiment of the invention.
Fig. 9 is a flow chart illustrating an operation of the apparatus for preventing unauthorized reading/execution of data of Fig.8.
Fig. 10 is a view representing a concept of processing performed at step ST8 of Fig.9.
Fig. 11 is a view showing a CD-ROM where a data track, in which data such as applications are recorded, is inwardly arranged toward the center, and an audio track having modified data is outwardly arranged in the CD-ROM.
Fig. 12 is an explanatory view showing how recording regions are constructed in a conventional optical disc recording medium which is difficult to be copied.
Fig. 13 is a conceptual view illustrating another conventional technique for preventing unauthorized copying of digital data which is recorded in a recording medium.

### Detailed Description of the Preferred Embodiments

Referring to drawings, preferred embodiments of the invention will be described below.

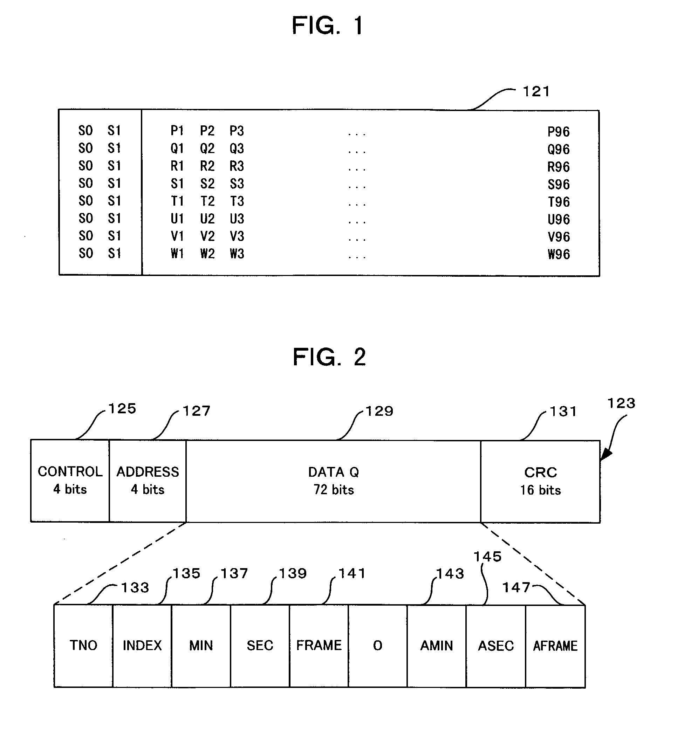

Fig.1 is a view showing a sub-code structure of a normal CD-ROM.

In sectors of the CD-ROM, there exists data of 98 bytes referred to as a sub-code 121. This sub-code 121 comprises synchronization patterns S0 and S1, and 8 sub-channels P to W.

Here, the synchronization patterns S0 and S1 are patterns that are utilized, at a time of reading-out, for demodulating the sub-code, which was modulated and recorded.

The sub-channel P is a flag indicating a start of a track. In the case where a numerical value "0" represents audio data and a numerical value "1" represents a start flag, a sector at which the sub-channel P changes from 1 to 0 as the sectors are reproduced sequentially indicates a beginning position of a next track. The sub-channel Q is a region relating to a mode and time information. The sub-channels R to W are user setting regions with which a user can deal freely.

Fig.2 is a view showing a structure of the sub-channel Q of Fig.1.

The sub-channel Q 123 having 96-bit data in total comprises control 125, address 127, data Q 129, and CRC (Cyclic Redundancy Check) value 131.

The control 125 to which 4 bits are allocated is judgment information with regard to an audio sector and a data sector. The address 127 to which 4 bits are allocated is data with regard to a mode of the sub-channel Q 123. More specifically, time information, media catalogue information, and ISRC code are recorded in the address 127.

To data Q 129, 72 bits are allocated. The data Q 129 includes TNO data 133, INDEX data 135, MIN data 137, SEC data 139, FRAME data 141, AMIN data 143, ASEC data 145, and AFRAME data 147.

The TNO data 133 is data of track numbers. The INDEX data 135 is data of index numbers . The MIN data 137 is minute information with regard to time information relative to a track. The SEC data 139 is second information with regard to the time information relative to the track. The FRAME data 141 is data of frame numbers relative to the track. The AMIN data 143 is minute information with regard to time information starting from the beginning of a disc. The ASEC data 145 is second information with regard to the time information starting from the beginning of the disc. The AFRAME data 147 is data of frame numbers starting from the beginning of the disc.

The CRC value 131 to which 16 bits are allocated will be explained briefly. The sub-code 121 exists as 98-byte data in 1 sector as described above. Occasionally, its data cannot be read out correctly due to a scratch etc. on CD-ROM. In the CD-ROM, the current position being reproduced is identified depending upon the sub-code 121. In order to detect an error of the sub-code 121 itself, the CRC value 131 is introduced. And, the CRC value 131 is an error detection code which was calculated from the control 125, the address 127, and the data Q 129.

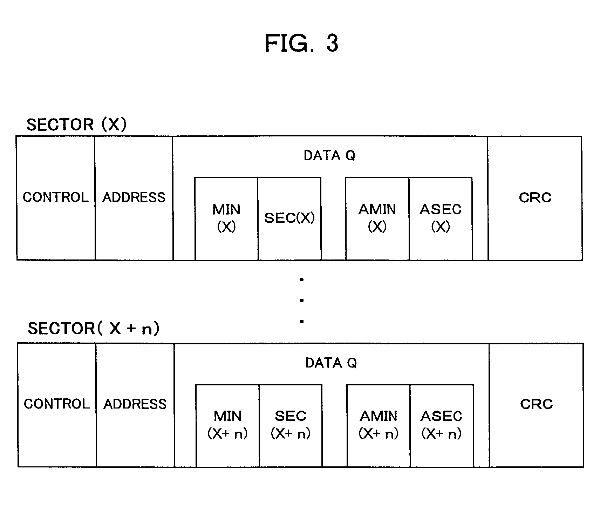

Fig.3 is a view showing a structure of the sub-channel Q with respect to each sector of a sector (X) through a sector (X+n) in the entire CD-ROM.

MIN data, SEC data, AMIN data, and ASEC data in the data Q of the sector (X) through the sector (X+n) are set as follows:

In MIN (X) of the sector (X) through MIN (X+n) of the sector (X+n), SEC (X) of the sector (X) through SEC (X+n) of the sector (X+n), AMIN (X) of the sector (X) through AMIN (X+n) of the sector (X+n), and ASEC (X) of the sector (X) through ASEC (X+n) of the sector (X+n), predetermined sequential time information is set, respectively. And, the time information is set so that it differs with each other in all sectors.

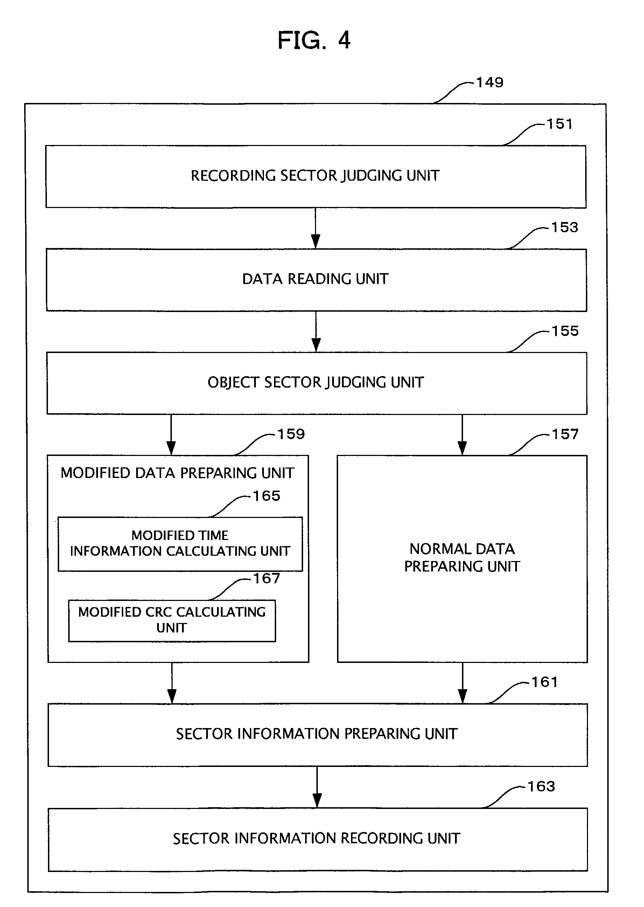

Fig.4 is a block diagram showing a data modifying apparatus in accordance with the preferred embodiment of the invention.

The data modifying apparatus 149 is provided with a recording sector judging unit 151, a data reading unit 153, an object sector judging unit 155, a normal data preparing unit 157, a modified data preparing unit 159, a sector information preparing unit 161, and a sector information recording unit 163. The modified data preparing unit 159 is provided with a modified time information calculating unit 165, a modified CRC calculating unit 167.

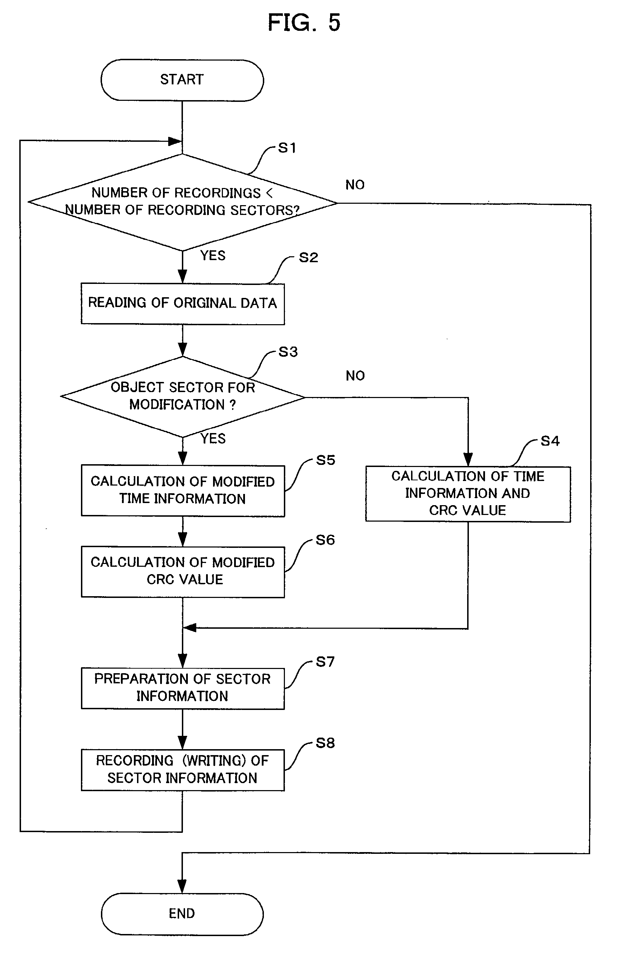

Fig.5 is a flow chart illustrating an operation of the data modifying apparatus of Fig.4. Hereinafter, the operation of the data modifying apparatus of Fig.4 that is carried out by a program provided therein will be explained.

At step S1, by the recording sector judging unit 151, the number of recordings is compared with the number of the recording sectors. If the number of recordings reaches to the number of the recording sectors, the processing is terminated. If the number of recordings does not reach to the number of recording sectors, the processing proceeds to step S2.

At step S2, by the data reading unit 153, original data is read out by the sector.

At step S3, by the object sector judging unit 155, it is judged whether or not a sector from which the original data is read out is any one of a plurality of selected object sectors for modification. At step S3, if the sector is judged that it is not the object sector, the processing proceeds to step S4. On the other hand, if the sector is judged that it is the object sector, the processing proceeds to step S5.

At step S4, the time information and the CRC value are calculated by the normal data preparing unit 157, and normal data, to which modification for preventing unauthorized reading/execution of data is not made, is prepared.

At step S5, by the modified time information calculating unit 165, the modified time information is calculated. More specifically, with respect to each of the MIN data 137, the SEC data 139, the AMIN data 143, and the ASEC data 145 contained in the data Q 129 of the sub-channel Q 123, which is comprised of the sub-code 121 of Fig.1 and is shown in Fig.2, calculation is carried out so that identical time information is set in all sectors to be modified in Fig.3.

At step S6 subsequent to step S5, the modified CRC value is calculated by the modified CRC calculating unit 167. To the CRC value 131 in the sub-channel Q 123 which is comprised of the sub-code 121 of Fig.1 and is shown in Fig.2 (and Fig.3), calculation is carried out so that a different value from such value as calculated from the control 125, the address 127 and the data Q 129 is set.

Through the above-mentioned steps S5 and S6, operation processing of the modified data preparing unit 159 is performed.

At step S7 subsequent to step S6, sector information organized per sector is prepared by the sector information preparing unit 161. At step S8 subsequent to step S7, the sector information organized per sector is recorded (written) in an original CD-ROM by the sector information recording unit 163. After step S8, the processing returns to step S1, and loop processing is performed.

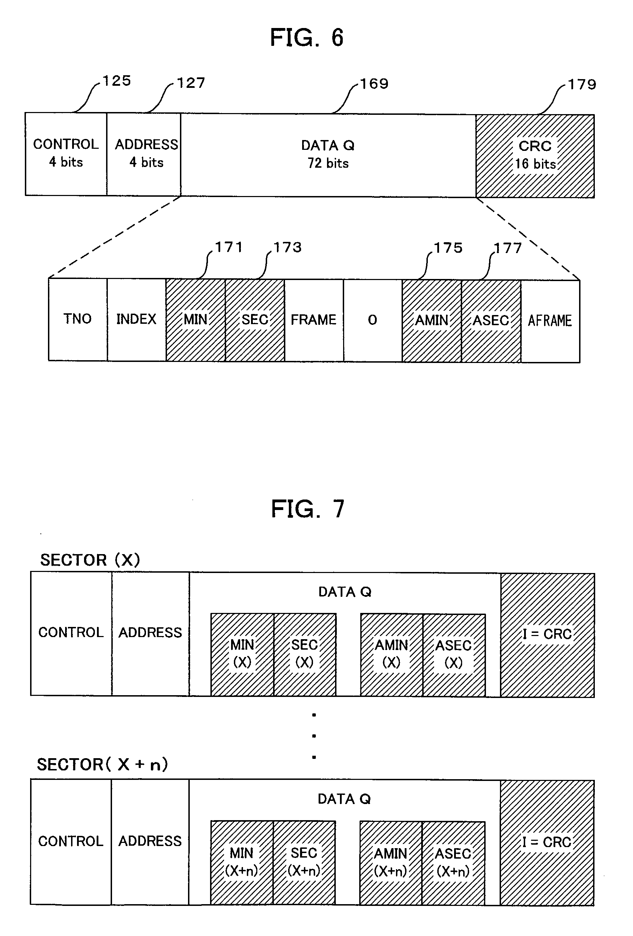

Fig.6 is a view which corresponds to Fig.2 and shows a structure of the sub-channel Q in which modified portions are specified. Fig.7 is a view which corresponds to Fig.3 and shows a structure of the sub-channel Q with respect to each sector in an entire CD-ROM in which the modified portions are specified.

Referring to Figs.6 and 7, the modified portions will be briefly explained, and modified data structure of the CD-ROM, particularly, a structure of the sub-channel Q will be clarified. MIN data 171, SEC data 173, AMIN data 175, and ASEC data 177 of data Q 169, and CRC value 179 are modified. The MIN data 171, the SEC data 173, the AMIN data 175, and the ASEC data 177 are modified so that identical time information is set to all sectors to be modified as described above. The CRC value 179 is modified so that a different value from such value as calculated from the control 125, the address 127 and the data Q 169, is set.

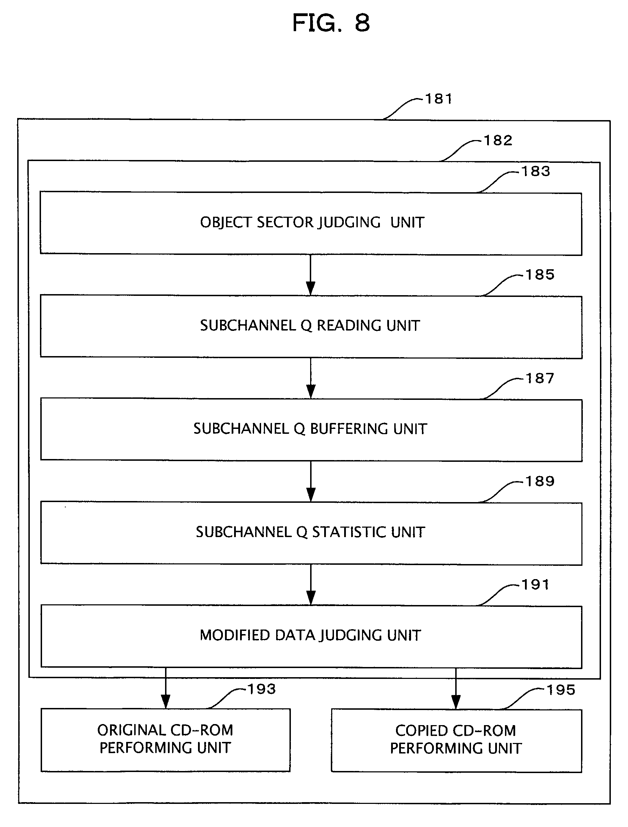

Fig.8 is a block diagram showing an apparatus for preventing unauthorized reading/execution of data in accordance with another embodiment of the invention.

An apparatus for preventing unauthorized reading/execution 181 is provided with a modified data detecting unit 182, an original CD-ROM performing unit 193, and a copied CD-ROM performing unit 195. The modified data detecting unit 182 is provided with an object sector judging unit 183, a sub-channel Q reading unit 185, a sub-channel Q buffering unit 187, a sub-channel Q statistic unit 189, and a modified data judging unit 191.

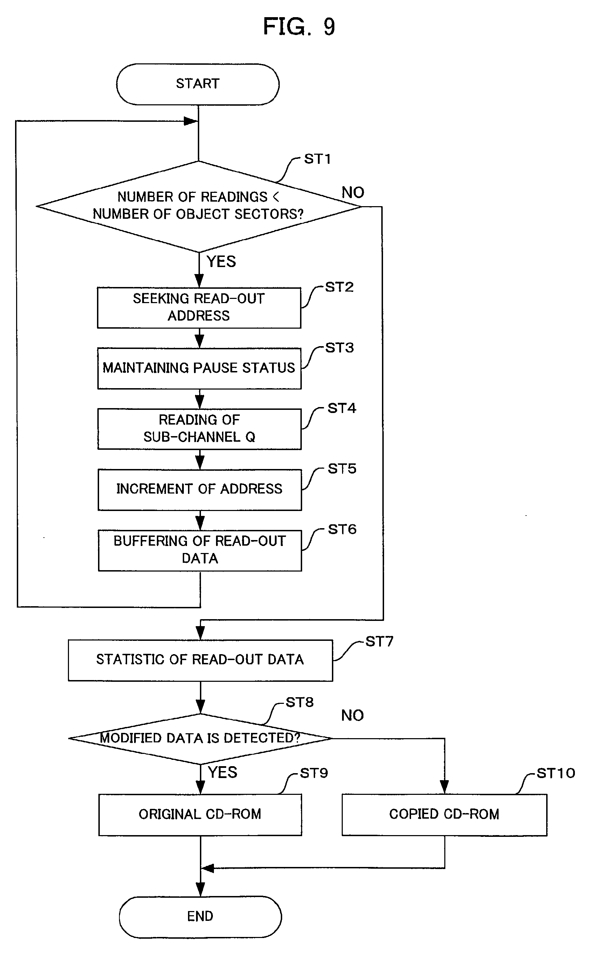

Fig.9 is a flow chart illustrating an operation of the apparatus for preventing unauthorized reading/execution of data of Fig.8. Hereinafter, the operation of the apparatus for preventing unauthorized reading/execution of data of Fig. 8 that is carried out by a program provided therein will be explained.

Firstly, it is assumed that the following processing is the processing in case that software, which is an object to be judged as to whether or not it is illegally copied to be read out/executed, is stored in a CD-ROM, and reading/execution is performed directly from a CD-ROM drive . In this connection, the reason why processing from step ST1 through step ST7 is adopted will be explained later in detail.

At step ST1, by the object sector judging unit 183, the number of readings is compared with the number of object sectors. If the number of readings does not reach to the number of object sectors, the processing proceeds to step ST2. If the number of readings reaches to the number of object sectors, the processing proceeds to step ST7.

The processing from step ST2 through step ST5 is carried out by the sub-channel Q reading unit 185.

At step ST2, SEEK command is used, whereby a vicinity including an address of an object to be read out is sought. At step ST3, a pause status is maintained. At step ST4, READ SUBCHANNEL command is used, whereby sub-channel Q is readout. At step ST5, the address is incremented.

At step ST6, by the sub-channel Q buffering unit 187, the read-out data is buffered. After processing of step ST6, the processing returns to step ST1, and processing as the same as described above is repeated until the number of readings reaches to the number of object sectors.

At step ST7, by the sub-channel Q statistic unit 189, a statistic of the buffered data is taken.

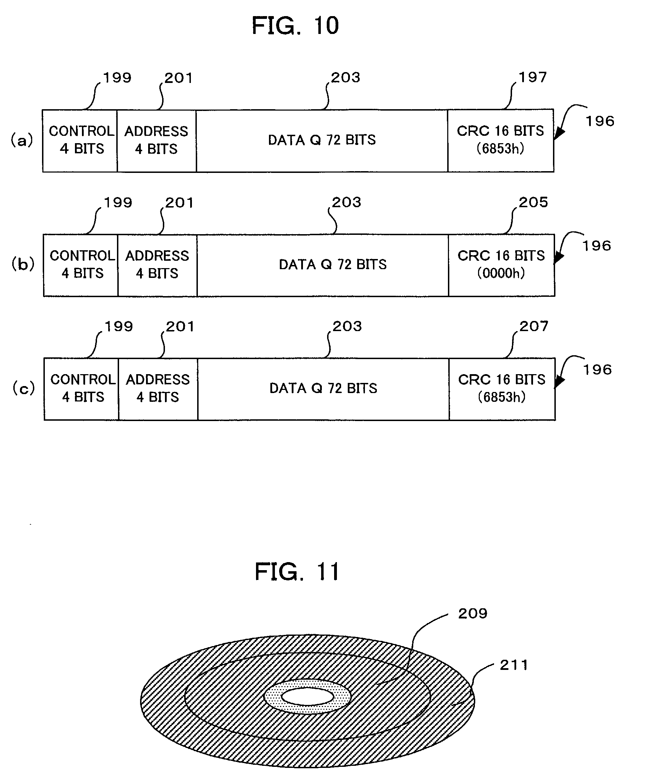

At step ST8, by the modified data judging unit 191, whether or not modified data is detected is judged. If the modified data is detected, the processing proceeds to step ST9. On the other hand, if the modified data is not detected, the processing proceeds to step ST10. Hereinafter referring to Fig.10, detection processing will be explained.

Fig.10 is a view illustrating a concept of processing carried out at step ST8 of Fig.9. In particular, Fig.10 (a) is a view showing an example of a frame structure of the sub-channel Q in the original CD-ROM to which modification has not been made; Fig.10(b) is a view showing an example of a frame structure of the corresponding sub-channel Q in the original CD-ROM in which modification has been made to the CRC value of Fig. 10(a); and Fig.10(c) is a view showing an example of a frame structure of the corresponding sub-channel Q in a copied CD-ROM, which is a copy of the original CD-ROM of Fig.10(b).

As shown in Fig.10(a), CRC value 197 of a sub-channel Q 196 is set to 16-bit value of (6853h). This value of (6853h) is a value calculated from control 199, address 201, and data Q 203.

Such CRC value 197 of the sub-channel Q 196 is modified, as shown in Fig.10(b), by the modified CRC calculating unit 167 of Fig.4 through calculation processing at step S6 of Fig.5. In the modification here, CRC value 205 is set to value of (0000h) which cannot be derived from such calculation as is performed at step S4.

When the original CD-ROM, in which the modification shown in Fig.10(b) is made to CRC value, is copied, CRC value 207 of the sub-channel Q 196 shown in Fig.10(c), is not an exact copy of the CRC value 205, but it is derived from calculation by a drive, based upon the control 199, the address 201, and the data Q 203, and is set to (6853h). This value (6853h) of the CRC value 207 is identical to the CRC value 197 shown in Fig.10 (a) , but is different from the CRC value 205 in the original CD-ROM to which modification has been made as shown in Fig.10(b). Such difference makes it possible to judge whether a CD-ROM, as an object to be read by a CD-ROM drive, is the original or a copy. For this purpose, detection of the modified data is carried out.

Moreover, in a copied CD-ROM, modified portions other than the CRC value such as MIN data, SEC data, AMIN data, and ASEC data of the data Q are set to sequential time information that is calculated by a writer. In this regard, the copied CD-ROM is different from the original CD-ROM, in terms of the MIN data, the SEC data, the AMIN data, and the ASEC data of the data Q in all sectors having the modified data, because such modified data have been set to be identical time information in the original CD-ROM. Therefore, by detection of the modified data, it is made possible to judge whether a CD-ROM, as an object to be read by a CD-ROM drive, is the original or a copy.

Referring back to Fig.9, at step ST9, by the original CD-ROM performing unit 193 of Fig.8, execution of data through reading operation continues normally. On the other hand, at step ST10, by the copied CD-ROM performing unit 195, execution of data through reading operation is blocked in such a manner that the execution of data through reading operation is cancelled or restricted, or stops, etc.

Next, the reason why the processing from step ST1 through step ST7 shown in Fig.9 is adopted will be explained.

In the CD-ROM drive, READ SUBCHANNEL command, that is described in the processing at step ST4 of Fig.9, is provided. This command functions as a command, not requesting readout of a sub-code of a designated sector, but requesting acquisition of a sub-code of a sector which can be read at a current position of a pickup. According to this command, even if acquisition of a sub-code of an identical address is tried, values within a certain range can be read with almost uniform probability. Such a phenomenon occurs because a position of the pickup is fixed but a disc is rotating. In addition, what is acquired by this command is the sub-channel Q of the sub-code, which is the modified portion, and this command is not a particular one but a command with which an audio CD player comes for the purpose of realization of such player, and which can be used for all drives.

Moreover, since data recorded in a CD-ROM is scrambled, an error which occurs due to a scratch is not a burst error, but is converted into a random error. Such errors are to be dispersed in a wide range and are hard to be detected from successive sectors . Consequently, by modifying CRC value etc., it is made possible to generate errors from sub-codes of successive sectors. By utilizing this, deflection occurs in values read out by the drive, in a range of the object sectors defined at step ST1 of Fig.9.

Based upon the foregoing, by evaluating data so acquired by the repeated processing from step ST2 through step ST6 of Fig.9, it is made possible to identify an existence of error caused by the modification.

By the way, even in the case that increment of address as shown at step ST5 is not performed, a read-out value may differ every time. This is because the READ SUBCHANNEL command is a command requesting for reading out the sub-code at the position of the pickup, but not a command requesting for designating and reading out a specific address. Since an issuance interval of the command is not 0, the read-out position is shifted, as a CD-ROM rotates, and the data so read out may be fluctuated.

For this reason, step ST7 of Fig. 9 for carrying out statistic processing in consideration of this fluctuation is adopted.

As a result of actual measurement, the fluctuation of the read-out value is observed in about 15 sectors. Therefore, if the first 15 sectors and the last 15 sectors of the object sectors were omitted from evaluation, and remaining data were used for the evaluation, about 15 sectors would be further necessary. In case of a normal CD-ROM, however, data can be read as data which fluctuate uniformly, and if data of approximately 5 sectors and more are available, it is possible to detect deflection of the data. It should be noted, however, that the number of sectors might be increased so as to improve reliability of data, while there would be no meaning from a viewpoint of statistic processing to provide not less than 15 sectors with respect to one CRC error.

In addition, if the CRC error existed in 1 sector, it would be difficult to distinguish the CRC error from a normal error which occurs due to a scratch.

In light of the above, it is preferable that modification is made to a plurality of sectors. For example, if modifications are made to two sectors, it is preferable that the number of object sectors at step ST1 of Fig.9 is to be 30 sectors.

The foregoing processing can be applied to one type of a drive which repeats retries in response to the CRC error, or another type of a drive which neglects a sub-code in which the CRC error occurred.

However, since there is also another type of a drive which neglects the CRC error itself, an arrangement described below is made so that such drive is treated equally as a drive which does not neglect the CRC error. That is, with respect to all sectors which incorporate the CRC errors as the modified data, MIN data, SEC data, AMIN data, and ASEC data, which are configuration data of data Q in the sub-channel Q, are arranged not to be of sequential values but to be of an identical value.

By step ST1 through step ST7 of Fig.9, which are adopted by the above-described reason, it is not necessary for a drive to come with a function of a control command (MMC) that is used to read out sub-codes, but the sub-code is readout for copy detection by an identical and single program. In other words, the detection of a copy by general-purpose sub-code reading is realized.

Hereinafter, advantages obtained by the preferred embodiments will be explained below.

Firstly, a disenabling sector, which generates an error, is not prepared in a copy region of an original CD-ROM, but a modification is made to a portion which is automatically generated by a drive. Since a conduct of copy itself is not prevented, it is difficult to judge that such modification was made. Thus, since one cannot find such modification easily, diffusion or distribution of unauthorized copies that may be done by an evading technique to deal with the modification will be restricted effectively. Such prevention against diffusion or distribution of unauthorized copies is true, even if an evading technology to deal with a dummy file for generating an error at a time of read-out has spread to unauthorized copy users as before. That is, the evading technology is simply a technology which uses a specific drive to deal with the dummy file, and an unauthorized copy is made only after a particular setting is done, so that it cannot provide an effective escape to get around the highly versatile technology of the invention.

In addition, since the dummy file is not prepared in the copy region, and no additional region for modification is necessary, an extra region is not necessary.

Furthermore, since the drive does not read the above-described modified portions themselves but utilizes information which is recorded in other area within the sector, e.g., utilizes the control, the address and the data Q with respect to the CRC value, an adverse effect to the operation of OS can be avoided. In particular, the CRC error exists for the purpose of detecting errors due to a scratch cut into the CD-ROM, etc., and it is an error which is necessary to continue the reading operation even when the original CD-ROM has such scratch. As a result, the error, which is generated by the modification, occurs only during a period of signal processing, and it is equivalent to the error which is generated by the scratch. In short, the modification in the invention never causes malfunction when reading the original CD-ROM.

Although, the above preferred embodiments are described for a CD-ROM, other optical discs such as DVDs may be used as recording media. Other recording media such as magnetic discs, which can hold data that was not copied at the time of reading but was generated by the reading end, may also be used.

In the above preferred embodiments, the sector which holds the modified data may be either of the data track structure or of the audio track structure. By actual experiments, a detection rate of the modified data is higher in the case that the modified data is incorporated in the sector of the audio track structure. Therefore, it is preferable that the modified data is incorporated in the sector of the audio track structure.

Further, when the CD-ROM holds certain data, such as applications, in a data track structure, while it has the sector which holds the modified data in an audio track structure, it is preferable that a data track structure region 209 to hold the data such as applications is inwardly arranged toward the center of the disc, while an audio track structure region 211 to hold the modified data is outwardly arranged toward the side of the disc, as shown in Fig.11. By such arrangement, the data such as applications in the original CD-ROM are read out smoothly, although there may be a case that the extra recording region is necessary.

Moreover, a computer program, executed by a computer, to perform the method for preventing unauthorized reading/execution of data shown in Fig.9 may be installed on read-out means, i.e., the apparatus for preventing unauthorized reading/execution of data shown in Fig.8 on the one hand, and the computer program may be held in an original CD-ROM together with data such as applications to be copied on the other. According to the latter, the above-described program is incorporated in either the original CD-ROM or a copied CD-ROM, and an unauthorized reading/execution of data can be prevented integrally with the recording medium.

The preferred embodiments of the invention have been disclosed by way of examples and it will be understood that other modifications may occur to those skilled in the art without departing from the scope and the spirit of the appended claims.

Finally, various advantages of the inventions will be outlined below.
(1) According to the invention, the modified data is prepared as a part of the original data which is to be recorded in the original recording medium, or the original recording medium records the original data which in part contains the modified data of a different value from a predetermined value to be generated by the reading means. The modified data of the original recording medium are different from the corresponding data of the copied recording medium. By utilizing such difference, more specifically, by blocking execution of data by read-out of the reading means in response to a failure of detecting the modified data, it is made possible to prevent the reading/execution by the reading means from the copied recording medium. Since the conduct of copy itself is not prevented, and it is difficult to judge that such modification was made, one cannot find such modification easily. Thus, diffusion or distribution of unauthorized copies that may be done by the evading technology to deal with the modification is restricted.
   Also, since the modified data of the original recording medium is not included in the copied data which is recorded in the copied recording medium, the extra region for the modification is not necessary in the original recording medium. Further, since the reading means does not read the above-described modified data itself, the adverse effects to the operating environment such as the OS can be avoided.
(2) According to the invention, the reading means generates the cyclic redundancy check value as the modified data by calculating through the use of values of the control, the address and the data Q, the control, address and data Q constituting the sub-channel Q of the sub-code. Since the error which is generated by the modification occurs only during the signal processing and such error is equivalent to the cyclic redundancy check error which is generated by the scratch, the malfunction can not occur at the time of reading out the original recording medium.
(3) According to the invention, the configuration data in the data Q is modified as the modified data other than the cyclic redundancy check value. Consequently, even if the reading means is one which neglects the cyclic redundancy check error itself, it is made possible to detect the modified data, and to prevent the reading/execution by the reading means from the copied recording medium.
(4) According to the invention, the modification is made over a plurality of sectors, or the data of the audio track structure is made into the modified data, such modified data which can be detected frequently as compared to a case that the data of a data track structure is made into the modified data. Consequently, it becomes easy to carry out a detecting process of the modified data, which is used for a judgment for whether the recording medium is the original or a copy, and reliability of the above judgment is improved. Also, it becomes more certain to prevent the reading/execution by the reading means from the copied recording medium.
(5) According to the invention, in case that the data read out from the original recording medium is executed, the data of the audio track structure that are outwardly arranged toward the side of the disc and read out through a last half of an entire read-out is used to incorporate the modified data. Consequently, read-out itself of the data track structure that are inwardly arranged toward the center of the disc and read out through a first half of the entire read-out is carried out smoothly, and the reading/execution by the reading means from the original recording medium is carried out properly.
(6) According to the invention, execution of data by read-out of the reading means continues in response to a successful detection of the modified data. In other words, the reading/execution of the data continues if the data are recorded in the original recording medium. Therefore, without giving rise to adverse effects to the reading/execution from the original recording medium, it is made possible to prevent the reading/execution of the data recorded in the copied recording medium.
(7) According to the invention, highly versatile detecting of the modified data, which is less dependent on the variety of the reading means, is possible, and the reading/execution of the data recorded in the copied recording medium can be prevented extensively.
(8) According to the invention, the computer programs may be incorporated in either the original recording medium or the copied recording medium, and the unauthorized reading/execution of data can be prevented integrally with the recording medium.

## Claims

1. A data modifying apparatus for modifying original data to be recorded in an original recording medium, so as to prevent execution of data that is read out by a reading means from a copied recording medium, in which copied data, and data of a predetermined value to be generated at a time of making the copy by said reading means, are recorded, said data modifying apparatus comprising:
modified data preparing means for preparing modified data as a part of said original data, said modified data being of a different value from such predetermined value as generated by said reading means.

2. The data modifying apparatus as set forth in claim 1, wherein said original recording medium is an optical disc; and
said modified data is a constituent data of a sub-channel Q of a sub-code.

3. The data modifying apparatus as set forth in claim 2, wherein said constituent data of sub-channel Q of the sub-code includes a cyclic redundancy check value; and
said modified data preparing means comprises means for preparing a modified cyclic redundancy check value of a different value from such predetermined value as generated by said reading means.

4. The data modifying apparatus as set forth in claim 2 or 3, wherein said constituent data of said sub-channel Q of the sub-code includes configuration data in data Q.

5. The data modifying apparatus as set forth in claim 4, wherein said configuration data in the data Q includes time information relative to a track or time information from a beginning of said optical disc; and
said modified data preparing means comprises means for preparing modified time information relative to the track or modified time information from the beginning of said optical disc, said modified time information being of a different value from such predetermined value as generated by said reading means.

6. A method for preparing modified data, modifying original data to be recorded in an original recording medium so as to prevent execution of data that is read out by a reading means from a copied recording medium, in which copied data, and data of a predetermined value to be generated at a time of making the copy by said reading means, are recorded;
wherein a modified data is prepared as a part of said original data by a modified data preparing means, said modified data being of a different value from such predetermined value as generated by said reading means.

7. A method for recording original data in an original recording medium, so as to prevent execution of data that is read out by a reading means from a copied recording medium, in which copied data, and data of a predetermined value to be generated at a time of making the copy of said original recording medium by said reading means, are recorded, said method comprising the steps of:
preparing a modified data as a part of an original data by a modified data preparing means, said modified data being of different value from such predetermined value as generated by said reading means; and
recording, in an original recording medium, said original data that includes said modified data prepared by said preparation step.

8. An original recording medium, so as to prevent execution of data that is read out by a reading means from a copied recording medium, in which copied data, and data of a predetermined value to be generated at a time of making the copy of said recording medium by said reading means, are recorded; wherein said original recording medium holds recorded original data, and the recorded original data includes modified data that is of a different value from such predetermined value as generated by said reading means.

9. The original recording medium as set forth in claim 8, wherein said original recording medium is an optical disc.

10. The original recording medium as set forth in claim 9, wherein said original recording medium is a compact disc.

11. The original recording medium as set forth in claim 9 or 10, wherein said modified data includes a modified cyclic redundancy check value in a sub-channel Q of a sub-code.

12. The original recording medium as set forth in any one of claims 9 through 11, wherein said modified data includes modified time information relative to a track or modified time information from a beginning of said optical disc in data Q, which is a constituent part of the sub-channel Q of the sub-code.

13. The original recording medium as set forth in any one of claims 8 through 12, wherein said modified data is data which is modified over a plurality of sectors.

14. The original recording medium as set forth in any one of claims 8 through 13, wherein said modified data is data of an audio track structure.

15. The original recording medium as set forth in claim 14, wherein said modified data is the data of the audio track structure which is located outside of a data track structure which is located inside toward a center of a disc.

16. An apparatus for preventing unauthorized reading/execution of data, so as to prevent execution of data that is read out by reading means from a copied recording medium, in which copied data, and data of a predetermined value to be generated at a time of making the copy by said reading means, are recorded, wherein an original recording medium to be read out by said reading means holds recorded original data which in part contains modified data of a different value from such predetermined value as generated by said reading means, said apparatus comprising:
a modified data detecting means capable of detecting, from the recorded data in said original recording medium or said copied recording medium, modified data which is recorded and is of a different value from such predetermined value as generated by said reading means; and
a reading/execution blocking means, in response to failure of detecting said modified data by said modified data detecting means, for blocking execution of data by read-out of said reading means.

17. The apparatus for preventing unauthorized reading/execution of data as set forth in claim 16, further comprising a reading/execution continuing means, in response to a successful detecting of said modified data by said modified data detecting means, for continuing execution of data by read-out of said reading means.

18. The apparatus for preventing unauthorized reading/execution of data as set forth in claim 16 or 17, wherein:
said original recording medium is an optical disc; and
said modified data is a constituent part of a sub-channel Q of a sub-code; and
said modified data detecting means comprises:
sub-channel Q reading means for reading said sub-channel Q of the sub-code, after seeking a read-out address;
sub-channel Q buffering means for buffering said sub-channel Q of the sub-code which is read out by said sub-channel Q reading means;
sub-channel Q statistic processing means for performing statistic processing for a plurality of the sub-channels Q of the sub-codes which are acquired by a plurality of operations of said sub-channel Q reading means and said sub-channel Q buffering means; and
modified data judging means for judging, from the result processed by said sub-channel Q statistic processing means, whether or not constituent data of the sub-channel Q of the sub-code, which is presumed to correspond to said read-out address, is said modified data.

19. The apparatus for preventing unauthorized reading/execution of data as set forth in claim 18, wherein said modified data includes a modified cyclic redundancy check value which is a constituent part of the sub-channel Q of the sub-code.

20. The apparatus for preventing unauthorized reading/execution of data as set forth in claim 18 or 19, wherein said modified data includes modified configuration data in data Q which is a constituent part of the sub-channel Q of the sub-code.

21. The apparatus for preventing unauthorized reading/execution of data as set forth in claim 20, wherein said modified configuration data in the data Q includes modified time information relative to a track or modified time information from a beginning of said optical disc.

22. A method for preventing unauthorized reading/execution of data, so as to prevent reading/execution of data, which is read out by reading means from a copied recording medium, in which copied data, and data of a predetermined value to be generated at a time of making the copy by said reading means, are recorded; wherein an original recording medium, which is capable of being read out by said reading means, records original data which in part contains modified data of a different value from such predetermined value as generated by said reading means, said method comprising the steps of;
detecting, from data recorded in said original recording medium or said copy of recording medium by a modified data detecting means, a modified data which is recorded and is of a different value from such predetermined value as generated by said reading means; and
blocking, in response to failure of detecting said modified data by said detecting means, reading/execution of data by read-out of said reading means.

23. The method for preventing unauthorized reading/execution of data as set forth in claim 22, further comprising a step of continuing, in response to a successful detection of said modified data by said modified data detecting means, execution of data by read-out of said reading means.

24. The method for preventing unauthorized reading/execution of data as set forth in claim 22 or 23, wherein:
said original recording medium is an optical disc;
said modified data is a constituent part of a sub-channel Q of a sub-code, and
said detecting step comprises the steps of:
reading a sub-channel Q of a sub-code by a sub-channel Q reading means, after seeking a read-out address;
buffering, by a sub-channel Q buffering means, read-out data of said sub-channel Q of the sub-code;
performing, by a sub-channel Q statistic processing means, statistic processing for a plurality of the sub-channels Q of the sub-codes which are acquired by a plurality of operations of said sub-channel Q reading steps and said sub-channel Q buffering step; and
judging, from the result processed by said sub-channel Q statistic processing step, by a modified data judging means, whether or not the data of the sub-channel Q of the sub-code, which is presumed to correspond to said read-out address, is said modified data.

25. A computer program, executed by a computer, for preparing a modified data, said modified data being a part of an original data to be recorded in an original recording medium, so as to prevent execution of data that is read out by a reading means from a copied recording medium, said program comprising the steps of:
providing original data to be recorded in an original recording medium; and
preparing a modified data, which is of a different value from such predetermined value as generated by a reading means at a time of making the copy.

26. A computer program, executed by a computer, for recording original data in an original recording medium, so as to prevent execution of data that is read out by a reading means from a copied recording medium, in which copied data, and data of a predetermined value to be generated at a time of making the copy of said original recording medium by said reading means, are recorded, said program comprising the steps of:
preparing a modified data as a part of an original data by a modified data preparing means, said modified data being of a different value from such predetermined value as generated by said reading means; and
recording, in an original recording medium, said original data that includes said modified data prepared by said preparation step.

27. A computer program, executed by a computer, for preventing unauthorized reading/execution of data that is read out by a reading means from a copied recording medium, in which copied data, and data of a predetermined value to be generated at a time of making the copy by said reading means, are recorded, wherein an original recording medium, which is capable of being read out by said reading means, records original data which in part contains modified data of a different value form a predetermined value to be generated by said reading means, said program comprising the steps of;
detecting, from data recorded in said original recording medium or said copied recording medium by a modified data detecting means, a modified data which is recorded and is of a different value from such predetermined value as generated by said reading means; and
blocking, in response to failure of detecting said modified data by said detecting means, a reading/execution of data by read-out of said reading means.

28. A computer program, stored in an original recording medium or a copied recording medium, executed by a computer, for preventing unauthorized reading/execution of data that is read out by a reading means from said copied recording medium, in which copied data, and data of a predetermined value to be generated at a time of making the copy by said reading means, are recorded, wherein said original recording medium, which is capable of being read out by said reading means, records original data which in part contains modified data of a different value from such predetermined value as generated by said reading means, said program comprising the steps of;
detecting, from data recorded in said original recording medium or said copy of recording medium by a modified data detecting means, a modified data which is recorded and is of a different value from such predetermined value as generated by said reading means; and
blocking, in response to failure of detecting said modified data by said detecting means, a reading/execution of data by read-out of said reading means.
